# EUROPEAN PATENT APPLICATION

(11) **EP 1 903 802 A2**
(43) Date of publication of application: **26.03.2008**
(21) Application number: 07116779.5
(22) Date of filing: 19.09.2007
(51) Int. Cl.: H04N 7/24

(54) **Method and system for transmitting notification data in a DVB-H system**

(30) Priority: 19.09.2006 KR 20060090624
(71) Applicant: Samsung Electronics Co., Ltd., Suwon-si, Gyeonggi-Do (KR)
(72) Inventor: Jeon, Jin-Woo, Gyeonggi-do (KR); Han, Young-Seop, Gyeonggi-do (KR); Kim, Young-Jip, Gyeonggi-do (KR)
(74) Representative: Grünecker, Kinkeldey, Stockmair & Schwanhäusser Anwaltssozietät

(57) **Abstract**

A method and system can transmit notification data regarding service/system change occurrence or urgent notification to a terminal for receiving a broadcast service in a Digital Video Broadcasting-Handheld (DVB-H) broadcast service. The notification data can be transmitted to the terminal through Electronic Service Guide (ESG) data.

## Description

The present invention generally relates to a Digital Video Broadcasting-Handheld (DVB-H) system, and more particularly to a method and system for providing a terminal with notification data regarding system and service changes when a DVB-H broadcast service is in operation.

DVB-H is a technical standard established to improve a reception rate of terrestrial digital television (DTV) on the move in Europe. DVB-H technology can implement mobile multimedia broadcasting that provides high-quality voice and video services anytime and anywhere, even when users are driving or walking.

Using DVB-H technology, a service model has the following structure. First, a transmitting stage is constructed with a network interactive with a broadcast provider and a communication provider according to a DVB Universal Mobile Telecommunications Service (UMTS) standard. The broadcast provider provides a terminal with compressed data in a DVB-H transmission scheme based on a DVB Audio Visual Content (AVC) standard. The terminal communicates with a mobile communication provider in a communication standard, such as DVB-UMTS/Global System for Mobile Communications (GSM) and the like, and also provides the broadcast provider with information regarding a receiving side through a communication network in real time.

On the other hand, broadcast related information is mostly included in an Electronic Service Guide (ESG) in a DVB-H system. A user may select a TV channel or a radio channel of interest through the ESG or may select an item to be downloaded. The ESG provides information for connecting the terminal to a specific Internet Protocol (IP) stream within a DVB-H transport stream. An operation for processing ESG data is divided into the following three processes.

Specifically, the three processes are classified into an ESG bootstrapping process in which a terminal detects types of ESG data capable of being received and detects how to acquire ESG data, an ESG acquisition process in which a terminal collects and processes ESG data, and an ESG update process in which a terminal stores a latest version of ESG data.

While a terminal receives high-quality voice and video services in the DVB-H system, changes may be made due to various factors within the DVB-H system. Information regarding several changes should be reported to the terminal.

However, a framework for transmitting notification data is not defined in a DVB-H Convergence of Broadcasting and Mobile Service (CBMS) ESG standard. For this reason, since there is no method for transmitting various notification data related to various changes, it is difficult to extend various functions of a service and the like. Thus, a notification data transmission method undefined in any standard needs to be provided.

In a DVB-H system as described above, it is important to reliably and efficiently make a transmission and response of a notification message indicating service change information and the like. Therefore, a need exists for a technology which can determine information elements and attribute values for constructing a notification message.

The present invention addresses at least the above problems and/or disadvantages and provides at least the advantages described below. Accordingly, the object of the present invention is to provide a method and system for transmitting notification data constructed in various schemes when a DVB-H broadcast service is in operation.

This object is solved by the subject matter of the independent claims.

Preferred embodiments are defined in the dependent claims.

Another aspect of the present invention is to provide a method and system for transmitting notification data regarding system and service changes by determining information elements and attribute values used to provide notification data.

In accordance with an aspect of the present invention, there is provided a method for transmitting notification data in a DVB-H system provided with a DVB-H transmission server and a DVB-H reception terminal, the method including constructing and transmitting, by the DVB-H transmission server, an ESG in which notification data is contained in an ESG container; analyzing, by the DVB-H reception terminal, the ESG container of a received ESG; and acquiring the notification data from a structure in which the notification data is present among multiple structures contained in the ESG container.

In accordance with another aspect of the present invention, there is provided a DVB-H system for transmitting notification data, the system including a DVB-H transmission server for constructing and transmitting an ESG in which notification data is contained in an ESG container; and a DVB-H reception terminal for analyzing the ESG container of a received ESG and acquiring the notification data from a structure in which the notification data is present among multiple structures contained in the ESG container.

The above and other features and advantages of the present invention will be more apparent from the following detailed description taken in conjunction with the accompanying drawings, in which:
FIG. 1 is a block diagram illustrating an Electronic Service Guide (ESG) single-stream transport mode in accordance with the present invention;
FIG. 2 is a block diagram illustrating an ESG multiple-stream transport mode in accordance with the present invention;
FIG. 3 illustrates a Digital Video Broadcasting-Handheld (DVB-H) system in accordance with the present invention;
FIG. 4 illustrates a method for including notification data in an ESG container in accordance with the present invention;
FIG. 5 illustrates syntax of an ESG container carrying notification data in accordance with the present invention;
FIG. 6 illustrates syntax of an ESG data repository in accordance with the present invention;
FIG. 7 illustrates syntax of an ESG extensible Markup Language (XML) fragment in accordance with the present invention;
FIG. 8 illustrates a definition of ESG_XML_fragment_type indicating each fragment type in accordance with the present invention;
FIG. 9 illustrates a definition of each structure type in accordance with the present invention;
FIG. 10 illustrates syntax of Encapsulated AUX data in accordance with the present invention;
FIG. 11 illustrates a ScheduleEvent fragment schema in accordance with the present invention; and
FIG. 12 is a flowchart illustrating the operation of a DVB-H reception terminal for receiving notification data in accordance with the present invention.

Preferred embodiments of the present invention will be described below with reference to the accompanying drawings. In the drawings, the same or similar elements are denoted by the same reference numerals even though they are depicted in different drawings. The matters defined in the description, such as construction and elements, are provided to assist in a comprehensive understanding of preferred embodiments of the invention. Also, descriptions of well-known functions and constructions are omitted for clarity and conciseness.

The present invention provides a method for providing a terminal for receiving a broadcast service with notification data regarding service/system change occurrence or urgent notification in a Digital Video Broadcasting-Handheld (DVB-H) broadcast service. In accordance with the present invention, the notification data can be transmitted to the terminal through Electronic Service Guide (ESG) data.

For convenience of explanation, an ESG transmission structure in a DVB-H system will be described. Then, an ESG data structure carrying notification data and an operation of the DVB-H system in accordance with the present invention will be described.

Upon receiving an ESG stream, the terminal acquires information used to receive a service from a service provider. When a user selects a specific service, the terminal receives data after accessing a data stream in which the service is provided using the acquired information. Information for accessing a service data stream from the terminal is transmitted in an ESG fragment.

Several ESG data models are tied on a fragment-by-fragment basis and are contained in one container. Each container is transmitted, which is regarded as one object, in a file delivery over unidirectional transport (FLUTE) session.

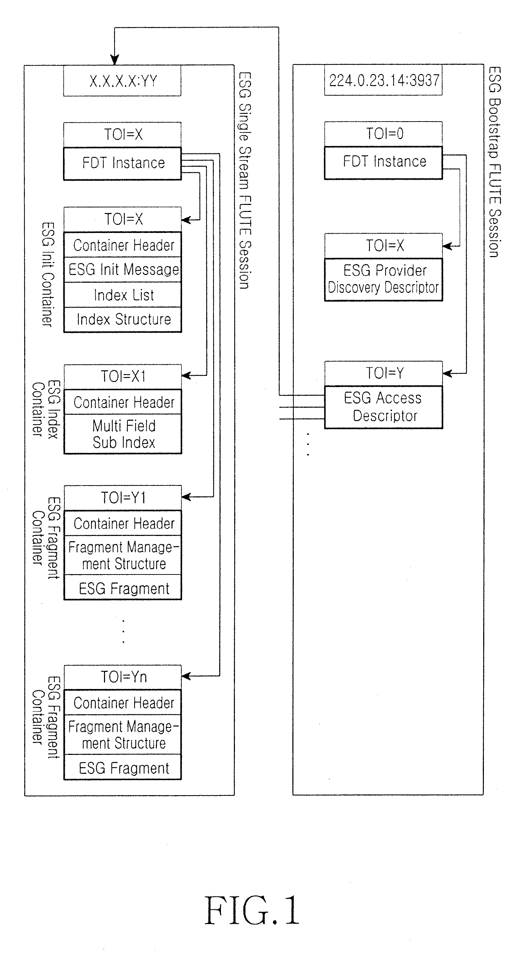

First, an ESG single-stream transport mode will be described. In the ESG single-stream transport mode, an ESG container is transmitted in a single FLUTE session, as shown in FIG. 1. This session can be retrieved using an ESG access descriptor transmitted in an ESG bootstrap session.

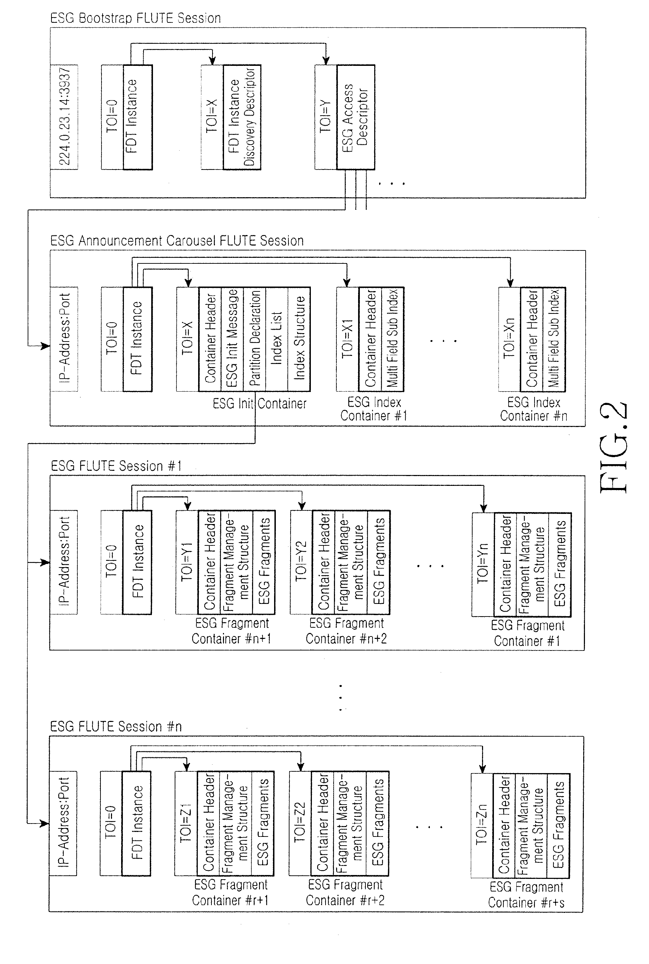

On the other hand, in an ESG multiple-stream transport mode, ESG containers are transmitted in at least three sessions, as shown in FIG. 2. The ESG bootstrap session indicates an ESG Announcement Carousel FLUTE session that gives notification of session information and the number of sessions in which actual ESG containers are transmitted.

Referring to FIG. 2, channel information of the ESG bootstrap session for an ESG transmission is reported to the terminal. When accessing a channel based on the channel information, the terminal receives bootstrap information. The bootstrap information is configured with an ESG provider descriptor and an ESG access descriptor. In the ESG provider descriptor, information regarding an identifier (ID), name and logo of an ESG provider and the like is transported. In the ESG access descriptor, information regarding an ESG Announcement Carousel, Internet Protocol (IP) addresses and the number of IP sessions in which an ESG is transmitted is transported.

In an ESG Announcement Carousel, an ESG Init Container and ESG Index Containers are transported. Information to be transported in the Init Container is as follows. The ESG Init Container contains option information of a decoder for decoding an ESG, Partition declaration, Index List, and Index Structure. When the ESG is transported in a number of sessions, the Partition Declaration within the Init Container includes session-by-session partition criterion information and session-by-session channel information. The Index List and Index Structure include mapping information between ESG fragments to be transmitted and containers. In FIGS. 1 and 2, an ESG FLUTE session is an ESG data session.

The ESG is contained and transported in the container as described with reference to FIG. 2. Each container is constructed with fragment management structure information indicating fragments constructing the container and ESG fragments.

Hereinafter, examples of the present invention will be separately described. In particular, how to contain and transport actual notification data in ESG data will be separately described below.

Many notification data transmission methods can be provided. The present invention utilizes a common characteristic of eXtensible Markup Language (XML) data since all ESG fragments and notification data have an XML format. In the present invention, the XML formatted notification data is transported with an ESG container. In the present invention, two methods for including and transporting notification data in an ESG container are provided.

In a first example of the present invention, notification data is inserted into one of structures constructing an ESG container and is transported to a terminal. The terminal performs a process for acquiring the notification data from a fragment in which a notification type is set while parsing each fragment. In a second example of the present invention, a notification structure is added to an ESG container. Notification data inserted into the notification structure is transported to a terminal. The terminal checks a structure type, retrieves the notification structure, and acquires the notification data.

If the XML formatted notification data is included and transported in the ESG container, the terminal not only can separate the notification data as in an existing ESG data transmission method, but can also use DVB-H standard compression methods, such as Gzip, BiM, and the like, without modification.

On the other hand, the entire schema of notification data transmitted to the terminal through the ESG container can be defined as shown in Tables 1a to 1e. Tables 1a to 1e show an example of the entire schema of the notification data. According to the example, a type of data related to all elements and attribute values constructing the schema in accordance with the present invention can be variously defined.

**TABLE 1a**

| Reference numeral | Name | Type | Category | Cardinality | Description |
|---|---|---|---|---|---|
| 501 | Notification | E1 | O | 0..N | Notification message fragment This is constructed with the following attribute and element values Attribute values: Id NotificationType Validity Element values: Name Description PresentationType ExtensionURL SessionInformation MediaInformation |
| 502 | id | A | M | 1 | Notification message identifier |
| 503 | NotificationT ype | A | M | 1 | Notification type: 0: UserUse 1: TerminalUse ServiceProvider defined function |
| 504 | Validity | A | O | 0..1 | Valid time of a fragment |
| 505 | Name | E2 | M | 1..N | Notification fragment title This has the following attribute value: Lang |
| 506 | Leng | A | O | 0..1 | Language |
| 507 | Description | E2 | M | 1..N | Notification message content or description |
| 508 | Lang | A | O | 0..1 | Language |

**TABLE 1b**

| | | | | | |
|---|---|---|---|---|---|
| 509 | PresentationT ype | E2 | M | 1 | This defines a type of message presentation. If PresentationType = 0, the terminal displays a notification message upon reception thereof. If PresentationType = 1, the terminal stores a notification message in a memory, such that a user can read message content later on. (Basic value) If PresentationType = 2, the terminal displays a notification message overlaid on a service currently being reproduced. PresentationType can be additionally designated, if needed. |

**TABLE 1c**

| | | | | | |
|---|---|---|---|---|---|
| 510 | ExtensionURL | E2 | O | 0..N | URL for additional information |
| 511 | SessionInformat ion | E2 | O | 0..N | Session information regarding materials Attribute values: ValidFrom ValidTo UsageType Element values: DeliverySession TransportObjectID Fragment AlternativeURL |
| 512 | ValidForm | A | O | 0..1 | Session start time |
| 513 | ValidTo | A | O | 0..1 | Session end time |
| 514 | UsageType | A | O | 0..1 | Session usage Type (for example, service guide, file delivery, or the like) |
| 515 | DeliverySession | E3 | M | 1 | Session information regarding content to be sent Attribute values: SourceIP TransportSessionID |
| 516 | SourceIP | A | M | 1 | SourceIP address to be sent |
| 517 | TransportSessio nID | A | M | 1 | Session ID to be sent |
| 518 | TransportObject ID | E3 | O | 0..N | Object ID to be sent |

**TABLE 1d**

| | | | | | |
|---|---|---|---|---|---|
| 519 | Fragment | E3 | O | 0..N | Fragment information of an object to be sent Attribute values: FragmentID FragmentVersion |
| 520 | FragmentID | A | O | 0..1 | Fragment ID value |
| 521 | FragmentVersio n | A | O | 0..1 | Fragment version information |
| 522 | AlternativeURI | E3 | O | 0..1 | Alternative URI address from which an object can be received |
| 523 | MediaInformati on | E2 | O | 0..1 | Media information for constructing a multimedia notification message Element values: Picture Video Audio |
| 524 | Picture | E3 | O | 0..N | Picture information Attribute values: MIMEType PictureURI |
| 525 | MIMEtype | A | O | 0..1 | MIME type |
| 526 | PictureURI | A | O | 0..1 | URI indicating the location of a picture |
| 527 | Video | E3 | O | 0..N | Picture information Attribute values: MIMEType VideoURI |

**TABLE 1e**

| | | | | | |
|---|---|---|---|---|---|
| 528 | MIMEtype | A | O | 0..1 | MIME type |
| 529 | VideoURI | A | O | 0..1 | URI indicating the location of video |
| 530 | Audio | E3 | O | 0..N | Picture information Attribute values: MIMEType AudioURI |
| 531 | MIMEtype | A | O | 0..1 | MIME type |
| 532 | AudioURI | A | O | 0..1 | URI indicating the location of audio |

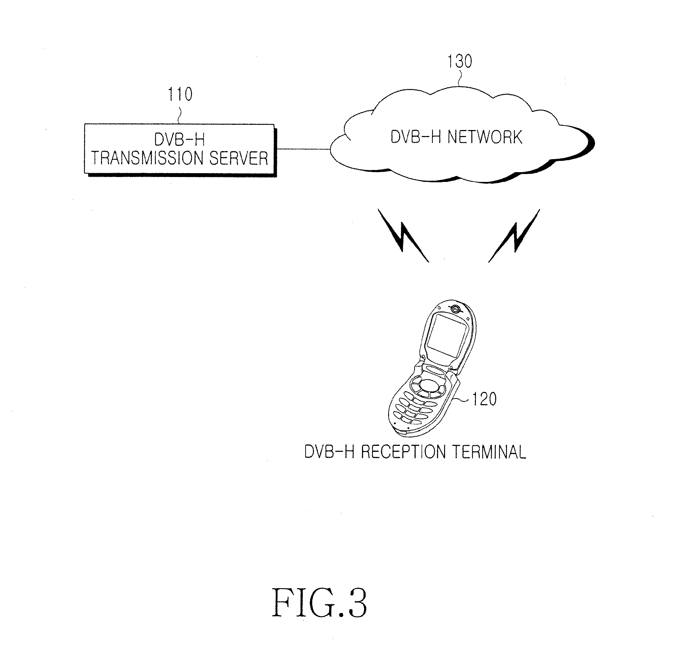

Next, an example of a structure and operation of the DVB-H system to which the present invention is applied will be described with reference to FIG. 3. FIG. 3 shows the DVB-H system in accordance with the present invention.

Referring to FIG. 3, the DVB-H system is provided with a DVB-H transmission server 110, a DVB-H reception terminal 120 and a DVB-H network 130.

First, the DVB-H transmission server 110 converts broadcast contents provided from various content providers according to a DVB-H standard and then provides a DVB-H service by broadcasting the converted contents through IP platforms assigned to the content providers and channels of the IP platforms. The DVB-H transmission server 110 broadcasts ESG data including information regarding a type of a broadcast service to be provided and many elements for receiving the broadcast service, for example, an IP address and pay service related information. When the ESG data is constructed, the DVB-H server 110 includes notification data regarding system and service changes in the ESG data in a state in which the DVB-H broadcast service is in operation.

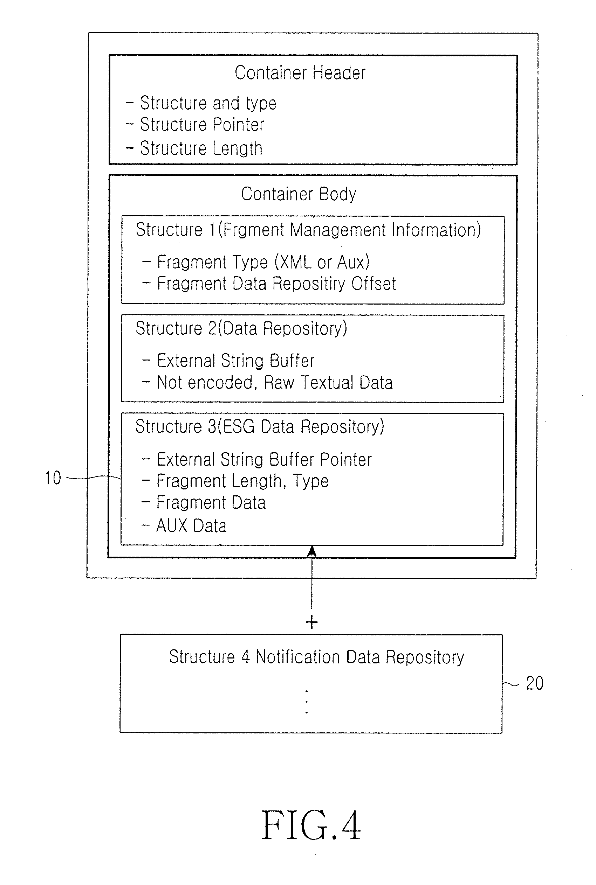

To add the above-described notification data to the ESG data, the notification data is inserted into an ESG container constructed with a container header and a container body, as shown in FIG. 4. FIG. 4 shows a method for including the notification data in the ESG container in accordance with the present invention.

In accordance with the first example of the present invention, the DVB-H transmission server 110 transmits notification data and other ESG fragment data within an ESG data repository structure among structures of an ESG container as indicated by reference numeral 10 of FIG. 4. In accordance with the second example of the present invention, the DVB-H transmission server 110 transmits the notification data by implementing a notification structure in addition to existing structures within the ESG container as indicated by reference numeral 20 of FIG. 4. This notification structure can be implemented by defining one of the structures inside the ESG container in a notification data repository type.

On the other hand, the DVB-H reception terminal 120 receives a transport stream from the DVB-H transmission server 110 through a DVB-H network 130, detects an ESG container, and analyzes the detected ESG container, thereby acquiring the notification data in the XML format from the ESG data repository structure or the notification structure defined in the notification data repository type.

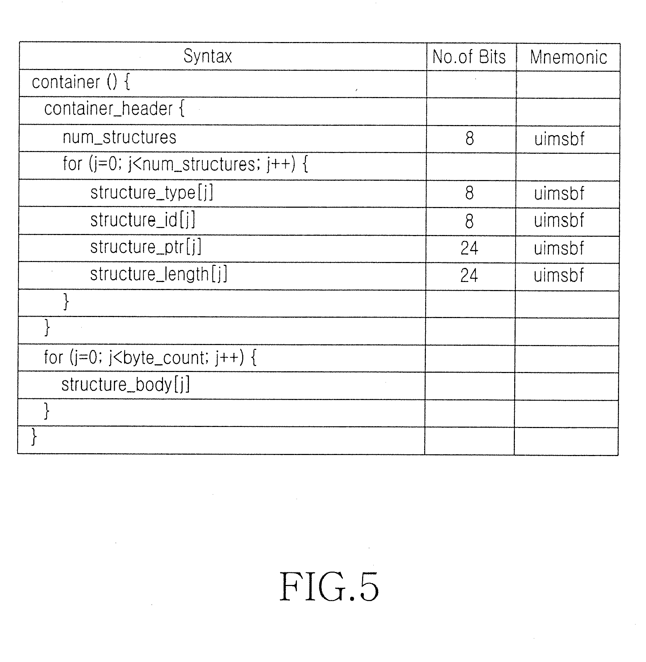

Next, syntax of the ESG container carrying the notification data in accordance with the present invention will be described with reference to FIG. 5.

As shown in FIG. 5, the ESG container is constructed with a container header and a container body. The container body can have a structure of multiple structure bodies. Since this structure has many types, the DVB-H reception terminal 120 classifies a structure type by reading "structure_type".

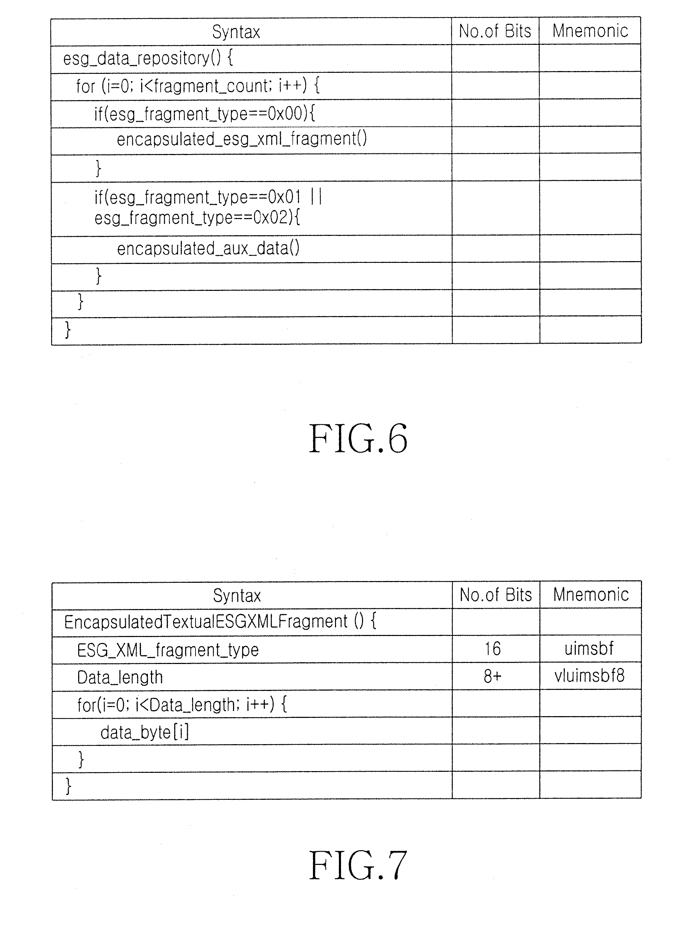

An ESG XML fragment is provided in a structure with a type of the ESG data repository. When the structure is constructed with ESG data repository syntax in accordance with the first example of the present invention described above, auxiliary (AUX) data and fragment data of the XML format can be provided in the structure as indicated by reference numeral 10 of FIG. 4. When the ESG data repository is analyzed based on the syntax shown in FIG. 6, the DVB-H reception terminal 120 can separate fragment data and AUX data from the structure of the ESG data repository. FIG. 6 shows the ESG data repository syntax in accordance with the present invention.

On the other hand, when fragment data is separated from the structure of the ESG data repository, the DVB-H reception terminal 120 can store fragment-by-fragment data by reading a type of each fragment based on syntax of an Encapsulated Textual ESG XML fragment, as shown in FIG. 7. The DVB-H reception terminal 120 can detect each fragment type from a value of ESG_XML_fragment_type of FIG. 7. FIG. 7 shows the syntax of the Encapsulated Textual ESG XML fragment.

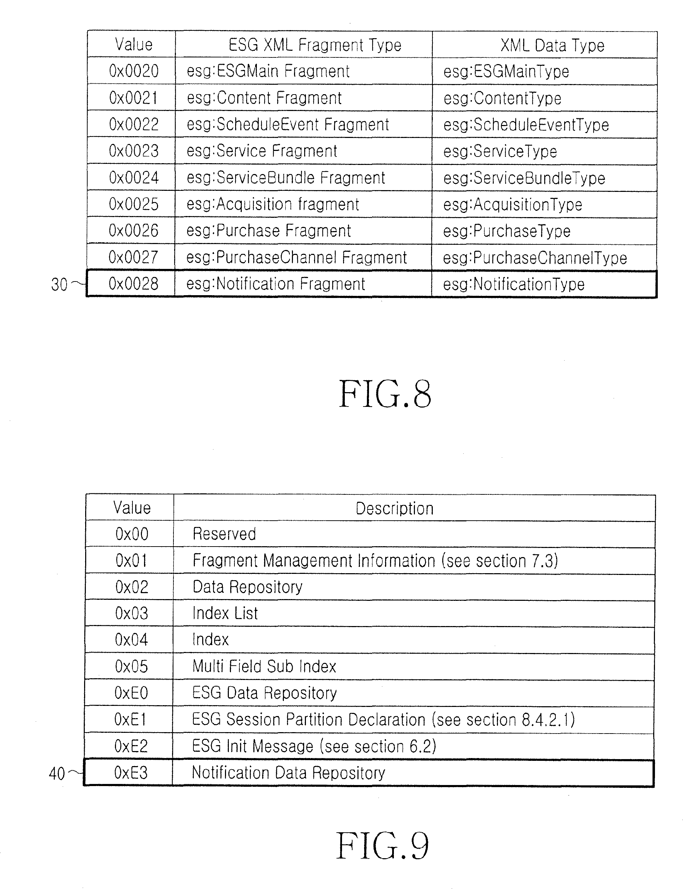

ESG_XML_fragment_type indicating each fragment type can be defined as shown in FIG. 8. As indicated by reference numeral 30 of FIG. 8, a notification type indicating the presence of a notification fragment is defined in addition to existing fragment types. As the notification type is additionally defined, as shown in FIG. 8, the DVB-H transmission server 110 can simultaneously transmit notification XML data and other ESG XML fragments.

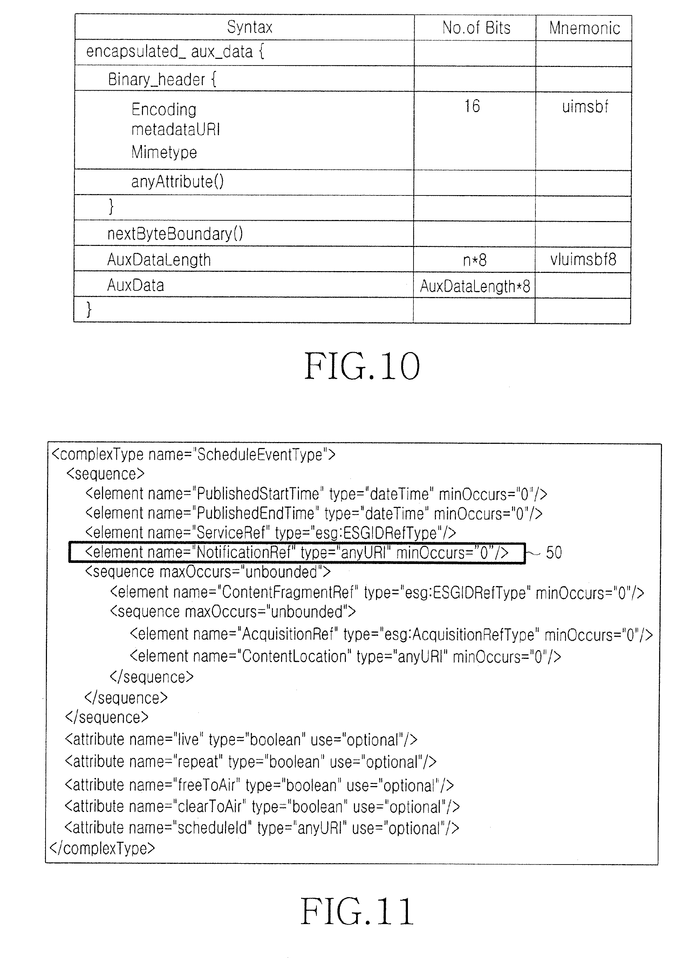

On the other hand, the DVB-H reception terminal 120 analyzes an ESG container included in a transport stream while receiving the transport stream from the DVB-H transmission server 110 through the DVB-H network 130. If it is determined that the value of ESG_XML_fragment_type indicates the notification type while the ESG container is analyzed, the DVB-H reception terminal 120 can analyze content of the notification data through a special notification processing module. When there is media data to be transmitted along with the notification data, the media data can be transmitted using an AUX data structure, as shown in FIG. 10. Of course, the media data can be transmitted in an additional file rather than in an ESG container. FIG. 10 shows the syntax of Encapsulated AUX data in accordance with the present invention.

A process in which the DVB-H reception terminal 120 acquires notification data by detecting a fragment having a set notification type has been described when the DVB-H transmission server 110 sets the notification type to transmit XML formatted notification data and other XML formatted ESG data in accordance with the first example of the present invention as described above. That is, the first example of the present invention relates to a case where an ESG fragment and a fragment dedicated for notification are carried in one structure and are simultaneously transmitted to the DVB-H reception terminal 120.

Next, a process in which the DVB-H reception terminal 120 acquires notification data by detecting a notification structure will be described when the DVB-H transmission server 110 defines an ESG data structure itself to a notification structure for notification data and transmits the defined notification structure in accordance with the second example of the present invention described above. That is, the second example of the present invention relates to a case where notification data is transmitted by setting one structure to a structure dedicated for notification. The DVB-H transmission server 110 can construct and transmit the notification data using only one transmission scheme. Of course, the notification data can be constructed and transmitted by applying both transmission schemes in accordance with the first and second examples of the present invention.

Each structure type can be defined as shown in FIG. 9. FIG. 9 shows a notification data repository structure additionally defined as indicated by reference numeral 40 to notify that a structure dedicated for notification is present in the existing structure_type. When the structure dedicated for notification is additionally defined as shown in FIG. 9, only the notification data can be included in a body of the defined notification structure. The associated media data for notification can be included in the same structure along with AUX data as shown in FIG. 10.

An example of transmitting only the notification data as described above has been described. Alternatively, when the above-described scheme is used, it is possible to transmit not only notification data used to update software but also the associated software.

Specifically, when software of the DVB-H reception terminal 120 is to be updated, the DVB-H transmission server 110 can transmit actual software simultaneously while transmitting notification data for software update. Information regarding the software to be updated is constructed with XML formatted notification data and is transmitted using either a transmission method in accordance with the first example of the present invention or a transmission method in accordance with the second example of the present invention. The associated software can be transmitted in the format of AUX data, as shown in FIG. 10, and can be transmitted in an additional file in a FLUTE session.

As described above, the notification data destined for the DVB-H reception terminal 120 is transmitted at an arbitrary time. Alternatively, the DVB-H transmission server 110 can transmit the notification data at a planned time or a regular time interval so the DVB-H reception terminal 120 can know in advance when the notification data is acquired. To transmit the notification data at a planned time or a regular time interval, the notification data can be scheduled in relation to a "ScheduleEvent" fragment.

Thus, the DVB-H transmission server 110 inserts an ID of an associated notification fragment into a "NotificationRef" element, as indicated by reference numeral 50 of FIG. 11, while transmitting the "ScheduleEvent" fragment. When the "ScheduleEvent" fragment for notification is present, the DVB-H reception terminal 120 displays or executes actual notification data when "PublishedStartTime" designated in the "ScheduleEvent" fragment is reached without immediately displaying the associated notification data.

As described above, the DVB-H transmission server 110 adds an element related to a notification fragment to a "ScheduleEvent" fragment schema of FIG. 11 in a "ScheduleEvent" fragment in order to report a notification time to the DVB-H reception terminal 120. FIG. I 1 shows a case where an element related to a notification fragment is added to the "ScheduleEvent" fragment schema in accordance with the present invention. When the DVB-H transmission server 110 constructs and transmits an ESG to provide time information regarding a transmission time of notification data in the "ScheduleEvent" fragment based on the schema shown in FIG. 11, the DVB-H reception terminal 120 detects the "ScheduleEvent" fragment of the ESG, detects the time information, and acquires the notification data when the time corresponding to the time information is reached. That is, when the associated time is reached, a position of the notification data is accessed and the notification data is displayed or executed. When the notification data is transmitted in relation to the "ScheduleEvent" fragment, the DVB-H transmission server 110 can provide the user with the notification data at a desired time.

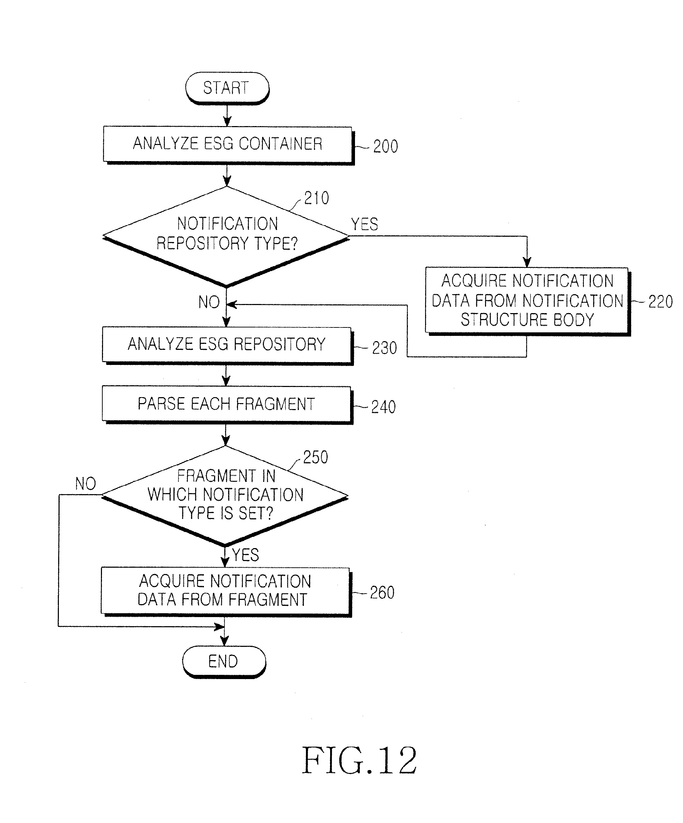

Next, operation of a DVB-H reception terminal for receiving ESG data will be described with reference to FIG. 12. FIG. 12 shows an operation of a DVB-H reception terminal for receiving the notification data in accordance with the present invention.

Referring to FIG. 12, a DVB-H reception terminal 120 first retrieves an ESG container carrying ESG data through an ESG bootstrap session reception process when the user executes a broadcast service. Since the process for retrieving the ESG container is a conventional process, a detailed description is omitted.

On the other hand, the DVB-H reception terminal 120 analyzes the ESG container in step 200 when the ESG container is retrieved. Through this analysis, the DVB-H reception terminal 120 detects multiple structures included in a container body. To detect the structures, the DVB-H reception terminal 120 detects structure types based on the syntax of FIG. 9. Thus, the DVB-H reception terminal 120 determines whether a notification repository type is set in a structure type in step 210.

If it is determined that there is no structure set to the notification repository type, the DVB-H reception terminal 120 proceeds to step 230 to analyze an ESG repository including ESG data based on the syntax of FIG. 6. The DVB-H reception terminal 120 parses each fragment included in the structure of the ESG repository based on the syntax of FIG. 7 in step 240. The DVB-H reception terminal 120 then divides fragment types with reference to FIG. 8 to separate fragment-by-fragment data from the ESG repository structure. Thus, the DVB-H reception terminal 120 determines whether a fragment, in which a notification type is set, is present by reading a fragment type in step 250. If the fragment in which the notification type is set is determined to be present, the DVB-H reception terminal 120 proceeds to step 260 to acquire the notification data from the fragment.

On the other hand, if a structure set to the notification repository type is determined to be present in step 210, the DVB-H reception terminal 120 proceeds to step 220 to acquire actual notification data from a notification structure body dedicated for the notification data. Then, the DVB-H reception terminal 120 proceeds to step 230 to perform the above-described operation. When proceeding to step 230 after acquiring the notification data from the notification structure and then analyzing the ESG repository once more, the DVB-H reception terminal 120 can acquire all notification data without missing the data, even when transmitting the notification data applied to both transmission schemes in accordance with the first and second examples of the present invention.

As is apparent from the above description, the present invention can provide a framework capable of transmitting not only software update notification data and scheduled notification data, but also various types of notification data for later use, by providing criteria for a DVB-H convergence of broadcasting and mobile service (CBMS) ESG standard used to transmit the notification data. Moreover, the present invention can utilize compression schemes defined in standards such as Gzip and BiM without modification, by transmitting notification data of an XML format using a structure of an ESG container when the notification data is transmitted.

While the invention has been shown and described with reference to certain preferred embodiments of the present invention thereof, it will be understood by those skilled in the art that various changes in form and details may be made therein without departing from the scope of the present invention as defined by the appended claims.

## Claims

1. A method for transmitting notification data in a digital video broadcasting-handheld, DVB-H, system provided with a DVB-H transmission server and a DVB-H reception terminal, the method comprising:
constructing and transmitting, by the DVB-H transmission server, an electronic service guide, ESG, in which notification data is contained in an ESG container;
analyzing, by the DVB-H reception terminal, the ESG container of a received ESG; and
acquiring the notification data from a structure in which the notification data is present among multiple structures contained in the ESG container.

2. The method of claim 1, wherein constructing and transmitting the ESG comprise:
setting one of fragments to a notification fragment, the fragments being included in a structure of an ESG data repository type among the multiple structures constructing the ESG container; and
including and transmitting the notification data in the notification fragment.

3. The method of claim 2, wherein setting the one of fragments to a notification fragment comprises:
setting a fragment type for identifying a fragment in the structure of the ESG data repository type to a notification type.

4. The method of claim 2 or 3, wherein acquiring, by the DVB-H reception terminal, the notification data comprises:
detecting the structure of the ESG data repository type from among the multiple structures;
detecting the notification fragment from among fragments included in the structure of the ESG data repository type; and
acquiring the notification data from the notification fragment.

5. The method of claim 1, wherein constructing and transmitting the ESG comprise:
setting one of the multiple structures constructing the ESG container to a notification structure; and
including and transmitting the notification data in the notification structure.

6. The method of claim 5, wherein setting one of the multiple structures constructing the ESG container to the notification structure comprises:
setting a structure type for identifying each structure to a notification structure type.

7. The method of claim 5 or 6, wherein acquiring, by the DVB-H reception terminal, the notification data comprises:
detecting the notification structure from among the multiple structures; and
acquiring the notification data from the detected notification structure.

8. The method of one of claims 1 to 7, further comprising:
constructing and transmitting, by the DVB-H transmission server, the ESG in which software update notification data and software are included in the ESG container; and
acquiring, by the DVB-H reception terminal, the software update notification data and the software by analyzing the ESG container of the received ESG..

9. The method of one of claims 1 to 7, further comprising:
constructing and transmitting, by the DVB-H transmission server, the ESG in which time information regarding a transmission time of the notification data is included in a schedule event fragment;
detecting, by the DVB-H reception terminal, the time information by reading the schedule event fragment of the received ESG; and
acquiring the notification data when the time corresponding to the time information is reached.

10. A digital video broadcasting-handheld, DVB-H, system for transmitting notification data, the system comprising:
a DVB-H transmission server for constructing and transmitting an electronic service guide, ESG, in which notification data is contained in an ESG container; and
a DVB-H reception terminal for analyzing the ESG container of a received ESG and acquiring the notification data from a structure in which the notification data is present among multiple structures contained in the ESG container.

11. The DVB-H system of claim 10, wherein the DVB-H transmission server sets one of fragments to a notification fragment, the fragments being included in a structure of an ESG data repository type among the multiple structures constructing the ESG container, and includes and transmits the notification data in the notification fragment.

12. The DVB-H system of claim 11, wherein the notification fragment is set by setting a fragment type for identifying a fragment in the structure of the ESG data repository type to a notification type.

13. The DVB-H system of claim 11 or 12, wherein the DVB-H reception terminal detects the structure of the ESG data repository type from among the multiple structures, detects the notification fragment from among fragments included in the structure of the ESG data repository type, and acquires the notification data from the notification fragment.

14. The DVB-H system of claim 10, wherein the DVB-H transmission server sets one of the multiple structures constructing the ESG container to a notification structure and includes and transmits the notification data in the notification structure.

15. The DVB-H system of claim 14, wherein the notification structure is set by setting a structure type for identifying each structure to a notification structure type.

16. The DVB-H system of claim 14 or 15, wherein the DVB-H reception terminal detects the notification structure from among the multiple structures; and acquires the notification data from the detected notification structure.

17. The DVB-H system of one of claims 10 to 16, wherein the DVB-H transmission server constructs and transmits the ESG in which software update notification data and software are included in the ESG container.

18. The DVB-H system of claim 17, wherein the DVB-H reception terminal acquires the software update notification data and the software by analyzing the ESG container of the received ESG when receiving the ESG from the DVB-H transmission server.

19. The DVB-H system of one of claims 10 to 16, wherein the DVB-H transmission server constructs and transmits the ESG in which time information regarding a transmission time of the notification data is included in a schedule event fragment.

20. The DVB-H system of claim 19, wherein the DVB-H reception terminal detects the time information by reading the schedule event fragment of the received ESG and acquires the notification data when time corresponding to the time information is reached.
